(19) Europäisches Patentamt / European Patent Office / Office européen des brevets

(11) **EP 4 431 310 B1**

(12) **EUROPEAN PATENT SPECIFICATION**

(45) Date of publication and mention of the grant of the patent:
**24.12.2025   Bulletin 2025/52**

(21) Application number: **22892330.6**

(22) Date of filing: **17.06.2022**

(51) International Patent Classification (IPC):
*B60C 9/26* (2006.01)          *B60C 9/20* (2006.01)

(52) Cooperative Patent Classification (CPC):
**B60C 9/263;** B60C 2009/2016; B60C 2009/2067; B60C 2009/2077; B60C 2009/266

(86) International application number:
**PCT/JP2022/024415**

(87) International publication number:
**WO 2023/084827 (19.05.2023 Gazette 2023/20)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2021   JP 2021183617**
          **10.11.2021   JP 2021183620**

(43) Date of publication of application:
**18.09.2024   Bulletin 2024/38**

(73) Proprietor: **BRIDGESTONE CORPORATION**
**Chuo-ku**
**Tokyo 104-8340 (JP)**

(72) Inventor: **SHIBATA, Saki**
**Tokyo 104-8340 (JP)**

(74) Representative: **Marks & Clerk LLP**
**15 Fetter Lane**
**London EC4A 1BW (GB)**

(56) References cited:
JP-A- 2016 215 943     JP-A- 2016 534 928
JP-A- 2018 043 748     JP-A- 2020 040 583
JP-A- 2020 093 661     JP-A- H06 297 914
JP-A- H1 024 703       JP-A- H11 115 415
US-A1- 2005 056 359    US-A1- 2006 000 536

**Description**

TECHNICAL FIELD

The present invention relates to a pneumatic tire.

BACKGROUND

Pneumatic tires provided with a belt as a reinforcement member are known. A configuration in which an endless belt is used as the belt is also known for aircraft tires. The endless belt is a belt including a belt cord that changes in the belt plane direction to be oriented inward in the tire width direction at both ends in the tire width direction and extends in a zigzag manner in the tire circumferential direction. An aircraft tire provided with this type of endless belt is described in Patent Literature (PTL) 1.

CITATION LIST

Patent Literature

PTL 1: JP 2016-534928 A
PTL 2: US2006000536A1 which discloses a pneumatic tire having a carcass and a belt reinforcing structure wherein the belt reinforcing structure is a composite belt structure having at least one pair of radially outer zigzag layers and at least one spirally wound belt layer with cords inclined at an inclination of 5 degrees or less relative to the tire's centerplane and located radially inward of and adjacent to the at least two radially outer belt layers. The at least two radially outer zigzag belt layers have cords inclined at 5 degrees to 30 degrees relative to the tire's centerplane and extending in alternation to turnaround points at each lateral edge of the belt layer. At each turnaround point the cords are folded or preferably bent to change direction across the crown of the carcass thus forming a zigzag cord path.
PTL 3: US2005056359A1 discloses a method of forming a composite belt structure for a tire. The method discloses the steps of applying a multicord reinforced strip having a strip width onto a rotating crowned building drum, the strips being wound in a zigzag configuration to form at least two zigzag layers wherein the crowned drum has non-overlapping portions of the strips placed in a central portion and extending in alternation to a pair of shoulder portions having portions of the strips overlapping, the central portion having a maximum diameter and the shoulder portions have a minimum diameter, the adjacent strips being placed apart from 0 to 2 mm in the central portion and the strips are increasingly overlapping in each shoulder portion as the strips extend from the central portion toward lateral ends of the belt structure to form belt layers of a composite belt structure having the cords per inch in the shoulder portion as measured axially inwardly from the axially inner edge of the strip adjacent the lateral ends of the narrowest radially outer belt layer radially inwardly greater than the cords per inch in the central portion as measured centered on the centerplane of the belt structure. The resultant method produces a pneumatic tire having a carcass and a belt reinforcing structure, the belt reinforcing structure having a composite belt structure of cord reinforced layers including at least two radially outer zigzag belt layers.

SUMMARY

(Technical Problem)

In an endless belt, the cut ends of the belt cord are not exposed at the ends in the tire width direction. Therefore, a tire provided with an endless belt is less likely to experience separation between adjacent rubber members at the positions of the ends of the endless belt in the tire width direction, improving the durability of the tire.
The belt cord of an endless belt has portions extending in the tire circumferential direction at the positions where the ends in the tire width direction change orientation. Therefore, in an endless belt, the rigidity in the tire circumferential direction (hereinafter simply referred to as the "circumferential rigidity") at the ends in the tire width direction is higher than the circumferential rigidity at the central portion in the tire width direction. This difference in circumferential rigidity can cause uneven wear on the tire tread surface.
It is an aim of the present invention to provide a pneumatic tire that includes an endless belt capable of reducing the difference in rigidity in the tire width direction.

(Solution to Problem)

A pneumatic tire as a first aspect of the present invention is a pneumatic tire including a carcass toroidally extending between a pair of bead portions, a belt disposed on a tire radial outer side of the carcass, and a tread rubber disposed on a tire radial outer side of the belt, wherein

the belt is an endless belt in which a rubber coated cord, formed by coating a belt cord with rubber, changes in a belt plane direction to be oriented inward in a tire width direction at both ends in the tire width direction and extends in a zigzag manner in a tire circumferential direction,
the rubber coated cord includes

bent portions located at both ends of the endless belt in the tire width direction, and
inclined extending portions located towards a center in the tire width direction from the bent portions and extending at an inclination relative to the tire circumferential direction,

an outer edge of the endless belt in the tire width direction is configured by a plurality of the bent portions of the rubber coated cord being disposed along the tire circumferential direction,
in a developed view of the endless belt, an intersection formed by the belt cord intersecting at two bent portions, adjacent in the tire circumferential direction, of the rubber coated cord is designated as T, and
in the developed view of the endless belt, a length L in the tire circumferential direction between two intersections T adjacent in the tire circumferential direction, a width W of the belt cord, and an inclination angle $\theta 1$ of the belt cord relative to the tire circumferential direction at the inclined extending portions of the rubber coated cord satisfy relationships
$5° < \theta 1 \leq 10°$, and $L < (3W/\tan(\theta 1 - 2°))$, or
$10° < \theta 1 \leq 45°$, and $L < (3W/\tan(\theta 1 - 5°))$.

A pneumatic tire as a second aspect of the present disclosure but not according to the present invention, is a pneumatic tire including a carcass toroidally extending between a pair of bead portions, a belt disposed on a tire radial outer side of the carcass, and a tread rubber disposed on a tire radial outer side of the belt, wherein

the belt is an endless belt in which a rubber coated cord, formed by coating a belt cord with rubber, changes in a belt plane direction to be oriented inward in a tire width direction at both ends in the tire width direction and extends in a zigzag manner in a tire circumferential direction,
the rubber coated cord includes

bent portions located at both ends of the endless belt in the tire width direction, and
inclined extending portions located towards a center in the tire width direction from the bent portions and extending at an inclination relative to the tire circumferential direction,

an outer edge of the endless belt in the tire width direction is configured by a plurality of the bent portions of the rubber coated cord being disposed along the tire circumferential direction,
in a developed view of the endless belt, an intersection formed by the belt cord intersecting at two bent portions, adjacent in the tire circumferential direction, of the rubber coated cord is designated as T, and
an inclination angle $\theta 1$ of the belt cord relative to the tire circumferential direction at the inclined extending portions of the rubber coated cord and an inclination angle $\theta 2$ of the belt cord relative to the tire circumferential direction at the bent portions of the rubber coated cord between two intersections T adjacent in the tire circumferential direction in an end view of the outer edge of the endless belt viewed from outside in the tire width direction satisfy relationships

$$5° < \theta 1 \leq 10°, \text{ and } \theta 2 > \theta 1 - 2°,$$

or

$$10° < \theta 1 \leq 45°, \text{ and } \theta 2 > \theta 1 - 5°.$$

(Advantageous Effect)

According to the present invention, a pneumatic tire that includes an endless belt capable of reducing the difference in rigidity in the tire width direction can be provided.

BRIEF DESCRIPTION OF THE DRAWINGS

In the accompanying drawings:

FIG. 1 is a tire widthwise cross-sectional view of a tire as an embodiment of the present invention;
FIG. 2 is a developed view of a second belt of the tire illustrated in FIG. 1;
FIG. 3 is an enlarged view of a portion of FIG. 2;
FIG. 4 is an end view of the outer edge of the second belt, illustrated in FIG. 2, viewed from outside in the tire width direction; and
FIG. 5 is a cross-sectional view of a rubber coated cord of the second belt illustrated in FIG. 2.

DETAILED DESCRIPTION

Embodiments of a pneumatic tire according to the present invention are described below with reference to the drawings. Identical configurations across drawings are labeled with the same reference signs.

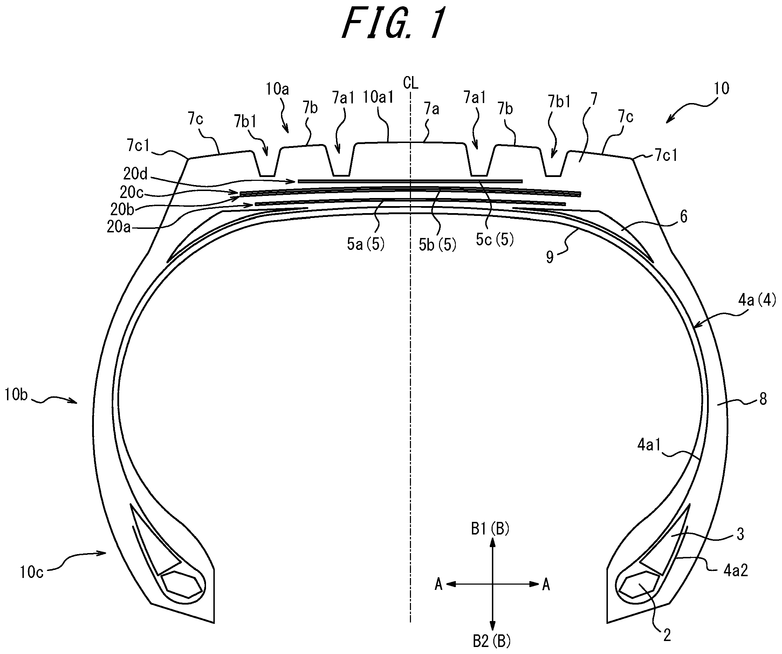

FIG. 1 illustrates a pneumatic tire 10 (hereinafter simply referred to as "tire 10"). FIG. 1 is a cross-sectional view of the tire 10 in the tire width direction. The tire 10 illustrated in FIG. 1 is a truck/bus tire, but the pneumatic tire is not limited to truck/bus tires. The pneumatic tire is not particularly limited and may, for example, be an aircraft tire, a construction vehicle tire, a mining vehicle tire, or a passenger vehicle tire.

As illustrated in FIG. 1, the tire 10 includes a tread portion 10a, a pair of sidewall portions 10b, and a pair of bead portions 10c. The sidewall portions 10b extend from each of the two ends of the tread portion 10a in the tire width direction A towards the inner side B2 in the tire radial direction B. The bead portions 10c are connected to the edges of the inner side B2 of each sidewall portion 10b in the tire radial direction B.

More specifically, the tire 10 of the present embodiment includes bead cores 2, bead fillers 3, a carcass 4, three belts 5, a cushion rubber 6, a tread rubber 7, a side rubber 8, and an inner liner 9.

[Bead Cores 2 and Bead Fillers 3]

The bead cores 2 and the bead fillers 3 are embedded in the bead portions 10c. The bead cores 2 include bead cords that are surrounded by a rubber coating. The bead cords are formed by steel cords. The bead fillers 3 are made of rubber and are located on an outer side B1 in the tire radial direction B relative to the bead cores 2.

[Carcass 4]

The carcass 4 extends toroidally between the pair of bead portions 10c, more specifically between the pair of bead cores 2. Specifically, the carcass 4 in the present embodiment includes a carcass ply 4a. The carcass ply 4a is turned up from the inside to the outside in the tire width direction A around each bead core 2. The carcass ply 4a may include a plurality of ply cords arranged in parallel to each other and a coating rubber covering the plurality of ply cords. The carcass 4 of the present embodiment includes only one carcass ply 4a but may instead include two or more carcass plies 4a. The plurality of ply cords of the carcass ply 4a may be arranged at an angle of, for example, 75° to 90° with respect to the tire circumferential direction C. The ply cords of the carcass ply 4a can be metal cords, such as steel cords.

More specifically, the carcass ply 4a of the present embodiment includes a main body 4a1 located between the pair of bead cores 2 and a turn-up portion 4a2 that is formed by being connected to the main body 4a1 and turned up from inside to outside in the tire width direction A around each bead core 2. The above-described bead filler 3 is arranged between the main body 4a1 and the turn-up portion 4a2 of the carcass ply 4a.

[Belts 5]

The belts 5 are embedded in the tread portion 10a. The tire 10 of the present embodiment includes three belts 5 on the outer side B1, in the tire radial direction B, of a crown portion of the carcass 4. The three belts 5 of the present embodiment are a first belt 5a, a second belt 5b, and a third belt 5c. Among the first belt 5a, the second belt 5b, and the third belt 5c, the first belt 5a is located at the innermost side B2 in the tire radial direction B. Among the first belt 5a, the second belt 5b, and the third belt 5c, the third belt 5c is located at the outermost side B1 in the tire radial direction B. The second belt 5b is located between the first belt 5a and the third belt 5c in the tire radial direction B.

In the present embodiment, four belt layers are formed by the first belt 5a, the second belt 5b, and the third belt 5c. Specifically, the first belt 5a forms a first belt layer 20a located at the innermost side B2 in the tire radial direction B. The third belt 5c forms a fourth belt layer 20d located at the outermost side B1 in the tire radial direction B. The second belt 5b forms a second belt layer 20b and a third belt layer 20c located between the first belt layer 20a and the fourth belt layers 20d in the tire radial direction B.

The first belt 5a forming the first belt layer 20a may include a plurality of belt cords arranged parallel to each other and a coating rubber covering the plurality of belt cords. The first belt layer 20a is an inclined belt layer in which the belt cords form a predetermined angle with respect to the tire circumferential direction C. The belt cords of the first belt layer 20a preferably have an inclination angle greater than 45° and less than 90° with respect to the tire circumferential direction C. The belt cords of the first belt layer 20a and the belt cords 31 of the adjacent second belt layer 20b, described below, may be inclined in the same direction or in opposite directions with respect to the tire circumferential direction C.

The material of the belt cord of the first belt 5a is not particularly limited. The belt cord of the first belt 5a may, for example, be a metal cord or an organic fiber cord.

The metal cord is, for example, a steel cord. The steel cord may be a steel monofilament or a steel multifilament formed by twisting a plurality of steel monofilaments together. The steel monofilament may have iron as a principal component and may contain various trace components such as carbon, manganese, silicon, phosphorus, sulfur, copper, and chromium.

Aramid fibers (aromatic polyamide fibers), polyketone (PK) fibers, polyparaphenylene benzobis oxazole (PBO) fibers, polyarylate fibers, polyamide-based fibers (PA), and the like can be used as the organic fiber cord. Also, carbon fibers such as polyacrylonitrile (PAN)-based carbon fibers, pitch-based carbon fibers, rayon-based carbon fibers, and the like, glass fibers, and rock fibers (rock wool) such as basalt fiber and andesite fiber can be used. The organic fiber cord may also be a hybrid cord composed of any two or more of the above.

The rubber composition used for the coating rubber of the first belt 5a is not particularly limited. Besides natural rubber, the rubber component of the rubber composition used for the coating rubber of the first belt 5a may, for example, be a vinyl aromatic hydrocarbon/conjugated diene copolymer, polyisoprene rubber, butadiene rubber, butyl rubber, halogenated butyl rubber, ethylene-propylene rubber, or other rubber components made of synthetic rubber. One rubber component may be used alone, or a combination of two or more components may be used.

The rubber composition used for the coating rubber of the first belt 5a may contain fillers such as carbon black and silica, softeners such as aroma oils, methylene donors such as hexamethylenetetramine, pentamethoxymethylmelamine, hexamethylenemethylmelamine and other methoxymethylated melamines, and compounding agents such as vulcanization accelerators, vulcanization acceleration aids, and age resistors as needed in normal amounts.

The third belt 5c forming the fourth belt layer 20d may include a plurality of belt cords arranged parallel to each other and a coating rubber covering the plurality of belt cords. The first belt layer 20d is an inclined belt layer in which the belt cords form a predetermined angle with respect to the tire circumferential direction C. The belt cords of the fourth belt layer 20d preferably have an inclination angle of 0° or more and 45° or less with respect to the tire circumferential direction C, more preferably an inclination angle of 0° or more and 20° or less. In other words, the inclination angle of the belt cords of the fourth belt layer 20d with respect to the tire circumferential direction C is preferably smaller than the above-described inclination angle of the belt cords of the first belt layer 20a with respect to the tire circumferential direction C. The belt cords of the fourth belt layer 20d and the belt cords 31 of the adjacent third belt layer 20c, described below, may be inclined in the same direction or in opposite directions with respect to the tire circumferential direction.

The belt cords of the third belt 5c may, for example, be metal cords or organic fiber cords. Examples of metal cords include steel cords. The steel cords may, for example, be steel monofilaments that include iron as a main component and also contain various micro inclusions such as carbon, manganese, silicon, phosphorus, sulfur, copper, and chromium. The steel cords may also be a steel multifilament in which a plurality of steel monofilaments is twisted together.

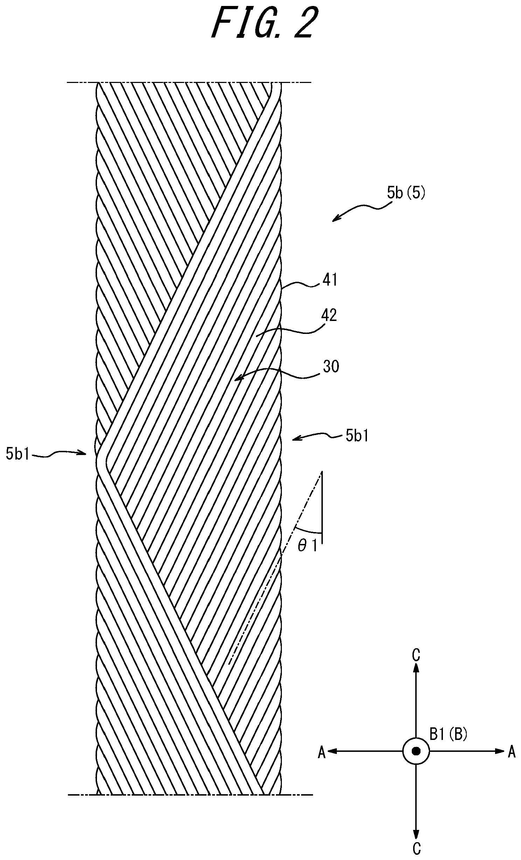

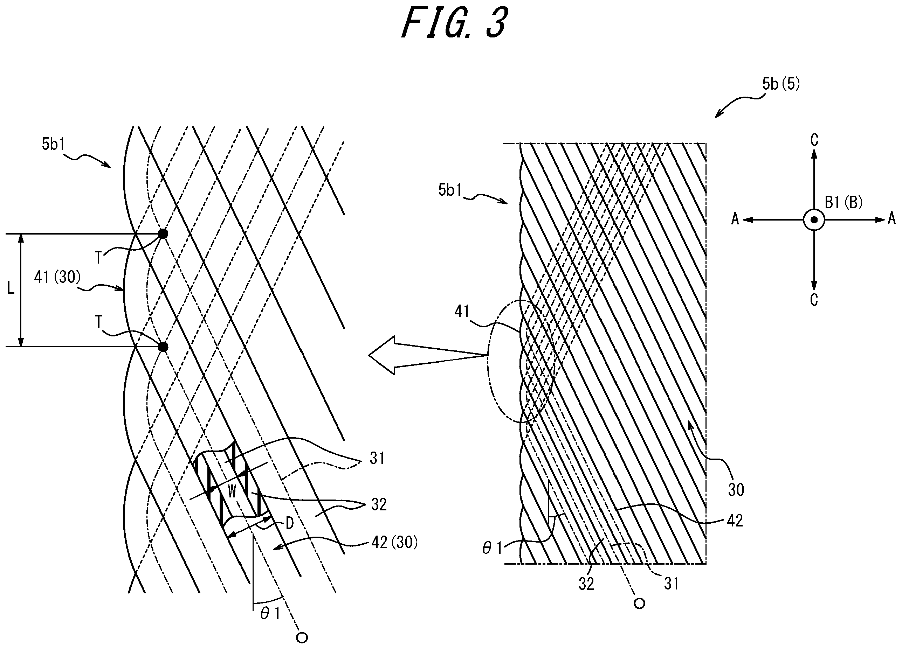

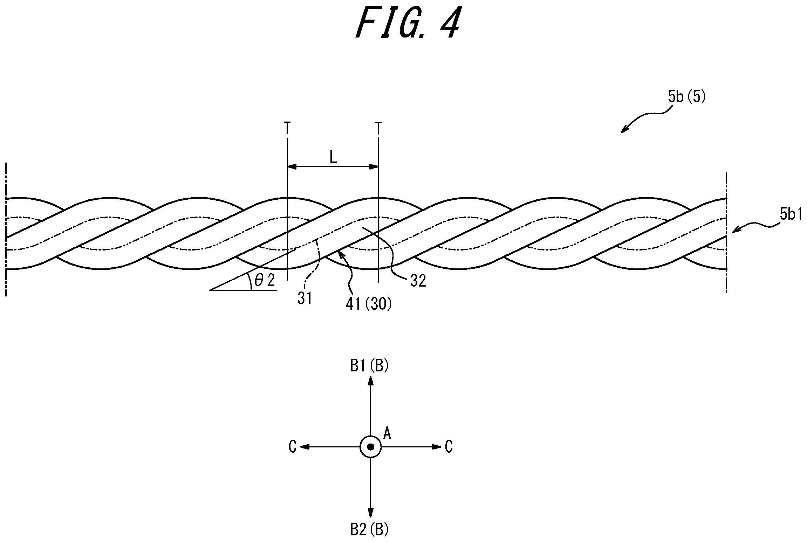

FIG. 2 is a developed view of the second belt 5b forming the second belt layer 20b and the third belt layer 20c. FIG. 3 is an enlarged view of a portion of the outer edge of the second belt 5b illustrated in FIG. 2 in the tire width direction A. FIG. 4 is an end view of the outer edge of the second belt 5b in the tire width direction A, viewed from the outside in the tire width direction A. For the sake of explanation, the developed view of the second belt 5b illustrated in FIGS. 2 and 3 is hereinafter referred to simply as the "belt developed view". The end view of the side of the second belt 5b illustrated in FIG. 4 is hereinafter referred to simply as the "belt end view".

As illustrated in FIGS. 2 to 4, the second belt 5b, which forms the second belt layer 20b and the third belt layer 20c, is an endless belt in which a rubber coated cord 30, formed by coating a belt cord 31 with coating rubber 32, changes in a belt plane direction (along the paper surface in FIGS. 2 and 3) to be oriented inward in the tire width direction A at both ends in the tire width direction A and extends in a zigzag manner in the tire circumferential direction C.

In greater detail, the rubber coated cord 30 extends from one end in the tire width direction A (for example, the left end of FIG. 2) toward the other end (for example, the right end of FIG. 2), is folded back at the other end in the tire width direction A, extends from the other end in the tire width direction A toward the one end in the tire width direction A, is folded back at the one end of the tire width direction A, and repeats the process by extending from the one end toward the other end, thereby extending in a zigzag manner in the tire circumferential direction C.

In other words, the rubber coated cord 30 includes bent portions 41 located at both ends of the endless belt in the tire width direction A and inclined extending portions 42 located towards the center in the tire width direction A from the bent portions 41 and extending at an inclination relative to the tire circumferential direction C.

As illustrated in FIG. 3, an outer edge 5b1 of the second belt 5b in the tire width direction A in the present embodiment is configured by a plurality of the bent portions 41 of the rubber coated cord 30 being disposed along the tire circumferential direction C. More specifically, the rubber coated cord 30 of the present embodiment extends back and forth from 1 to 10 times between both outer edges 5b1 of the second belt 5b in the tire width direction A over one revolution in the tire circumferential direction C. The bent portion 41 of the $(N + 1)^{th}$ revolution of the rubber coated cord 30 refers to the portion of the second belt 5b that changes direction at the outer edge 5b1 of the second belt 5b in the tire width direction A and does not overlap with the rubber coated cord 30 of the $N^{th}$ revolution and the rubber coated cord 30 of the $(N + 2)^{th}$ revolution in the tire radial direction B in a belt developed view (see FIGS. 2, 3). "N" is any integer 1 or more. However, this definition of the bent portion 41 is limited to $N \leq X - 2$ in the case in which the rubber coated cord 30 is wound over a total of X revolutions in the tire circumferential direction C.

The inclined extending portion 42 of the rubber coated cord 30 is the portion that is connected to the bent portion 41 and extends with respect to the tire circumferential direction C. The rubber coated cord 30 of this embodiment is arranged in the tire circumferential direction C so that the inclined extending portion 42 of the $(N + 1)^{th}$ revolution in the tire circumferential direction C is adjacent, in the tire circumferential direction C, to the inclined extending portion 42 of the $N^{th}$ revolution.

The second belt 5b forms at least two belt layers by the inclined extending portions 42 of the rubber coated cord 30 being overlapped in the tire radial direction B. More specifically, the second belt 5b of the present embodiment forms two belt layers, the second belt layer 20b and the third belt layer 20c, by the inclined extending portions 42 being overlapped in the tire radial direction B.

In each of the second belt layer 20b and the third belt layer 20c, two of the inclined extending portions 42 adjacent in the tire circumferential direction C within the rubber coated cord 30 do not have an overlapping portion in the tire radial direction B. In other words, the inclined extending portion 42 of the $N^{th}$ revolution and the inclined extending portion 42 of the $(N + 1)^{th}$ revolution that are adjacent in the tire circumferential direction C do not overlap in the tire radial direction B, but are connected in the tire circumferential direction C. In this way, it is easier to ensure the reinforcement strength, in the tire circumferential direction C, of the second belt 5b as an endless belt.

The inclination angle θ1 of the belt cord 31 with respect to the tire circumferential direction C is equal in the second belt layer 20b and the third belt layer 20c, which overlap in the tire radial direction B, but their directions are opposite. In other words, in a case in which the belt cord 31 in the second belt layer 20b is inclined toward one side in the tire width direction A with respect to the tire circumferential direction C, the belt cord 31 in the third belt layer 20c is inclined toward the other side in the tire width direction A with respect to the tire circumferential direction C. The second belt layer 20b and the third belt layer 20c thus form an interlocking belt.

The inclination angle θ1, with respect to the tire circumferential direction C, of the belt cord 31 in the second belt layer 20b and the third belt layer 20c is greater than 5° and is 45° or less.

Next, the features of the edges, in the tire width direction A, of the second belt 5b as an endless belt will be described. In the belt developed view (see FIG. 3), an intersection formed by the belt cord 31 intersecting at two bent portions 41, adjacent in the tire circumferential direction C, of the rubber coated cord 30 is designated as "T". In FIGS. 3 and 4, the centerline O of the belt cord 31 of the rubber coated cord 30 is indicated by a dashed dotted line. As illustrated in FIG. 3, the above-described intersection T refers to the intersection point of the centerlines O of the belt cords 31.

In the tire 10, in the belt developed view (see FIG. 3), the length L in the tire circumferential direction C between two intersections T adjacent in the tire circumferential direction C, the width W of the belt cord 31, and the inclination angle θ1 of the belt cord 31 relative to the tire circumferential direction C at the inclined extending portions 42 of the rubber coated cord 30 satisfy the following relationships.

$$5° < θ1 \leq 10°, \text{ and } L < (3W/\tan(θ1 - 2°)), \text{ or}$$
$$10° < θ1 \leq 45°, \text{ and } L < (3W/\tan(θ1 - 5°)) \qquad \text{Expression (1)}$$

By setting the length L so that the aforementioned relationship (Expression 1) is satisfied, the component of the belt cord 31 in the tire circumferential direction C at the bent portion 41 of the rubber coated cord 30 can be reduced. Therefore, the circumferential rigidity of the second belt 5b as an endless belt can be reduced at the edges in the tire width direction A. As a result, the difference in circumferential rigidity of the second belt 5b in the tire width direction A can be reduced, and uneven wear on the tread surface 10a1 of the tire 10 can be suppressed.

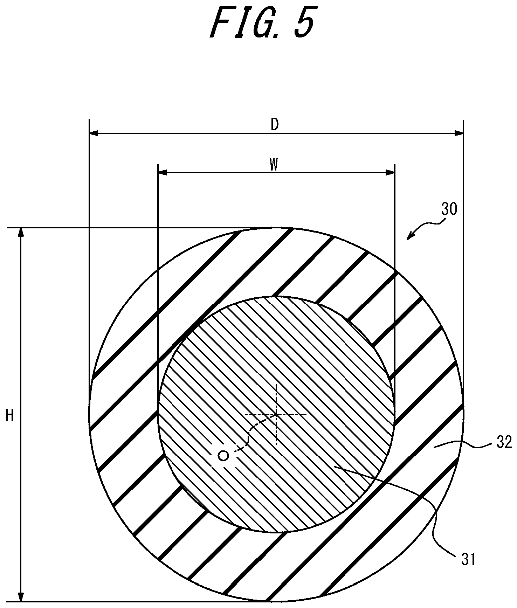

As illustrated in FIGS. 3 to 5, the rubber coated cord 30 of the present embodiment includes only one belt cord 31, but the number of belt cords 31 included in the rubber coated cord 30 is not limited. However, the rubber coated cord 30 preferably contains only one belt cord 31. In other words, in the rubber coated cord 30 of the present embodiment, only one belt cord 31 is preferably covered by the coating rubber 32. In this way, the width D (see FIGS. 3, 5) of the rubber coated cord 30 in the belt developed view can be easily reduced. The bent portion 41 of the rubber coated cord 30 can therefore easily change in the belt plane direction to be oriented inward in the tire width direction A with a large curvature (small radius of curvature). As a result, a length L that satisfies the aforementioned relationship (Expression 1) can more easily be achieved.

The rubber coated cord 30 in the present embodiment has a width D in the belt developed view (see FIGS. 3, 5) equal to or less than the thickness H (see FIG. 5), in the tire radial direction, of the rubber coated cord 30. In this way, the bent portion 41 of the rubber coated cord 30 can easily change in the belt plane direction to be oriented inward in the tire width direction A with a large curvature (small radius of curvature). As a result, a length L that satisfies the aforementioned relationship (Expression 1) can more easily be achieved.

Furthermore, the bent portions 41 of the rubber coated cord 30 in the present embodiment do not include a portion extending linearly in the tire circumferential direction C in the belt developed view (see FIGS. 2, 3). In other words, the bent portion 41 of the rubber coated cord 30 in the present embodiment is formed only by a portion that is curved by a predetermined radius of curvature in the belt developed view (see FIGS. 2, 3). In this way, the component of the belt cord 31 in the tire circumferential direction C at the bent portion 41 of the rubber coated cord 30 can be reduced. A length L that satisfies the aforementioned relationship (Expression 1) can thereby more easily be achieved.

As illustrated in FIG. 4, an inclination angle of the belt cord 31 relative to the tire circumferential direction C at the bent portions 41 of the rubber coated cord 30 between two intersections T adjacent in the tire circumferential direction C in the belt end view (see FIG. 4) is designed "θ2". In such a case, the inclination angle θ1 and the inclination angle θ2 preferably satisfy the following relationships.

$$5° < θ1 \leq 10°, \text{ and } θ2 > θ1 − 2°, \text{ or}$$
$$10° < θ1 \leq 45°, \text{ and } θ2 > θ1 − 5° \qquad (\text{Expression } 2)$$

By setting the inclination angle θ2 so that the aforementioned relationship (Expression 2) is satisfied, the component of the belt cord 31 in the tire circumferential direction C at the bent portion 41 of the rubber coated cord 30 can be reduced. Therefore, the circumferential rigidity of the second belt 5b as an endless belt can be reduced at the edges in the tire width direction A. As a result, the difference in circumferential rigidity of the second belt 5b in the tire width direction A can be further reduced, and uneven wear on the tread surface 10a1 of the tire 10 can be further suppressed.

As illustrated in FIG. 5, the outer shape of a cross-section orthogonal to the extending direction of the rubber coated cord 30 in the present embodiment is circular, but the cross-sectional outer shape is not particularly limited. The outer shape of a cross-section orthogonal to the extending direction of the rubber coated cord 30 may be another shape, such as an oval or rectangular shape, for example. The maximum length of a cross-section orthogonal to the extending direction of the rubber coated cord 30 may, for example, be 0.7 mm to 10 mm, but is not particularly limited. In a case in which the outer shape of a cross-section orthogonal to the extending direction of the rubber coated cord 30 is circular, as in the present embodiment, the maximum length of a cross-section orthogonal to the extending direction of the rubber coated cord 30 refers to the diameter of a cross-section orthogonal to the extending direction of the rubber coated cord 30.

As illustrated in FIG. 5, the outer shape of a cross-section orthogonal to the extending direction of the belt cord 31 in the present embodiment is circular, but the cross-sectional outer shape is not particularly limited. The outer shape of a cross-section orthogonal to the extending direction of the belt cord 31 may be another shape, such as an oval or rectangular shape, for example. The maximum length of a cross-section orthogonal to the extending direction of the belt cord 31 may, for example, be 0.5 mm to 6 mm, but is not particularly limited. In a case in which the outer shape of a cross-section orthogonal to the extending direction of the belt cord 31 is circular, as in the present embodiment, the maximum length of a cross-section orthogonal to the extending direction of the belt cord 31 refers to the diameter of a cross-section orthogonal to the extending direction of the belt cord 31.

The coating thickness of the coating rubber 32 of the rubber coated cord 30 can, for example, be 0.1 mm to 2 mm, but the coating thickness of the coating rubber 32 is not particularly limited. The coating thickness of the coating rubber 32 may differ depending on the position in the circumferential direction of the belt cord 31 in a cross-section orthogonal to the extending direction of the rubber coated cord 30.

The material of the belt cord 31 of the second belt 5b is not particularly limited. The belt cord 31 of the second belt 5b may, for example, be a metal cord or an organic fiber cord. Since the belt cord 31 is plastically deformed and bent at both ends of the second belt 5b in the tire width direction A, however, a highly flexible organic fiber cord is preferably used.

The metal cord is, for example, a steel cord. The steel cord may be a steel monofilament or a steel multifilament formed by twisting a plurality of steel monofilaments together. The steel monofilament may have iron as a principal component and may contain various trace components such as carbon, manganese, silicon, phosphorus, sulfur, copper, and chromium.

Aramid fibers (aromatic polyamide fibers), polyketone (PK) fibers, polyparaphenylene benzobis oxazole (PBO) fibers, polyarylate fibers, polyamide-based fibers (PA), and the like can be used as the organic fiber cord. Also, carbon fibers such as polyacrylonitrile (PAN)-based carbon fibers, pitch-based carbon fibers, rayon-based carbon fibers, and the like, glass fibers, and rock fibers (rock wool) such as basalt fiber and andesite fiber can be used. The organic fiber cord may also be a hybrid cord composed of any two or more of the above.

The rubber composition used for the coating rubber 32 of the second belt 5b is not particularly limited. Besides natural rubber, the rubber component of the rubber composition used for the coating rubber of the second belt 5b may, for example, be a vinyl aromatic hydrocarbon/conjugated diene copolymer, polyisoprene rubber, butadiene rubber, butyl rubber, halogenated butyl rubber, ethylene-propylene rubber, or other rubber components made of synthetic rubber. One rubber component may be used alone, or a combination of two or more components may be used.

The rubber composition used for the coating rubber of the second belt 5b may contain fillers such as carbon black and silica, softeners such as aroma oils, methylene donors such as hexamethylenetetetramine, pentamethoxymethylmelamine, hexamethylenemethylmelamine and other methoxymethylated melamines, and compounding agents such as vulcanization accelerators, vulcanization acceleration aids, and age resistors as needed in normal amounts.

[Cushion Rubber 6]

As illustrated in FIG. 1, the cushion rubber 6 is preferably provided on the inside B2, in the tire radial direction B, of the edge of the first belt 5a in the tire width direction A. This can reduce distortion at the edge of the first belt 5a in the tire width direction A and the temperature rise caused by this distortion, thereby improving the durability of the tire 10.

[Tread Rubber 7]

As illustrated in FIG. 1, the tread rubber 7 is disposed on the outside B1 in the tire radial direction B at the crown portion of the main body 4a1 of the carcass ply 4a and at the first to third belts 5a to 5c, which form the first to fourth belt layers 20a to 20d. The tread surface 10a1, which is the outer surface of the tread portion 10a of the present embodiment, is formed by the tread rubber 7. As illustrated in FIG. 1, the tread surface 10a1 has formed thereon two inner circumferential grooves 7a1 that define a center land portion 7a through which the tire equatorial surface CL passes, and two outer circumferential grooves 7b1 that are located outside the inner circumferential grooves 7a1 in the tire width direction A and define intermediate land portions 7b between the inner circumferential grooves 7a1 and the outer circumferential grooves 7b1. The tread surface 10a1 of the present embodiment also has shoulder land portions 7c defined between the outer circumferential grooves 7b1 and the tread edges 7c1 located outside of the outer circumferential grooves 7b1 in the tire width direction A. The tread surface 10a1 may have formed thereon widthwise grooves extending in the tire width direction A, for example.

[Side Rubber 8]

The side rubber 8 is arranged on the outside, in the tire width direction A, of the main body 4a1 and the turn-up portion 4a2 of the carcass ply 4a. The outer surface of the sidewall portion 10b and the outer surface of the bead portion 10c in the present embodiment are configured by the side rubber 8. The end of the side rubber 8 on the outer side B1 in the tire radial direction B is connected to the end of the above-described tread rubber 7 in the tire width direction A. More specifically, in the present embodiment, the end of the side rubber 8 on the outer side B1 in the tire radial direction B and the end of the above-described tread rubber 7 in the tire width direction A are connected so as to overlap in the tire width direction A.

[Inner Liner 9]

The inner liner 9 covers the tire inner surface side of the main body 4a1 of the carcass ply 4 and configures the tire inner surface of the tire 10. The inner liner 9 is layered onto the tire inner surface side of the main body 4a1 of the carcass ply 4a. The inner liner 9 may, for example, be formed from a butyl-based rubber having low air permeability.

In addition to the configuration described above, the tire 10 may, for example, be provided with one or more layers of chafers in the bead portion 10c. Each chafer may have a plurality of chafer cords arranged parallel to each other and a coating rubber covering the plurality of chafer cords. The plurality of chafer cords of each chafer may extend at an angle of 25° to 70° with respect to the tire circumferential direction C. In a case in which the plurality of chafers is stacked, the chafer cords of adjacent chafers may be inclined in the same direction or in opposite directions with respect to the tire circumferential direction C.

The material of the chafer cords is not particularly limited. The chafer cords may, for example, be metal cords or organic fiber cords.

The metal cord is, for example, a steel cord. The steel cord may be a steel monofilament or a steel multifilament formed by twisting a plurality of steel monofilaments together. The steel monofilament may have iron as a principal component and may contain various trace components such as carbon, manganese, silicon, phosphorus, sulfur, copper, and chromium.

Aramid fibers (aromatic polyamide fibers), polyketone (PK) fibers, polyparaphenylene benzobis oxazole (PBO) fibers, polyarylate fibers, polyamide-based fibers (PA), and the like can be used as the organic fiber cord. Also, carbon fibers such as polyacrylonitrile (PAN)-based carbon fibers, pitch-based carbon fibers, rayon-based carbon fibers, and the like, glass fibers, and rock fibers (rock wool) such as basalt fiber and andesite fiber can be used. The organic fiber cord may also be a hybrid cord composed of any two or more of the above.

The rubber composition used for the coating rubber of the chafer is not particularly limited. Besides natural rubber, the rubber component of the rubber composition used for the coating rubber of the chafer may, for example, be a vinyl aromatic hydrocarbon/conjugated diene copolymer, polyisoprene rubber, butadiene rubber, butyl rubber, halogenated butyl rubber, ethylene-propylene rubber, or other rubber components made of synthetic rubber. One rubber component may be used alone, or a combination of two or more components may be used.

The rubber composition used for the coating rubber of the chafer may contain fillers such as carbon black and silica, softeners such as aroma oils, methylene donors such as hexamethylenetetetramine, pentamethoxymethylmelamine, hexamethylenemethylmelamine and other methoxymethylated melamines, and compounding agents such as vulcanization accelerators, vulcanization acceleration aids, and age resistors as needed in normal amounts.

Various modifications and changes may be made . For example, the tire 10 of the above-described embodiment includes the cushion rubber 6, but the tire 10 may be configured without the cushion rubber 6.

In the above-described embodiment, the length L is set so that the aforementioned relationship (Expression 1) is satisfied, and the inclination angle θ2 is set so that the aforementioned relationship (Expression 2) is satisfied, but this configuration is not limiting. Instead of setting the length L to satisfy the aforementioned relationship (Expression 1), the inclination angle θ2 may be set so that the aforementioned relationship (Expression 2) is satisfied. Even with this configuration, the component of the belt cord 31 in the tire circumferential direction C at the bent portion 41 of the rubber coated cord 30 can be reduced, as above. Therefore, the circumferential rigidity of the second belt 5b as an endless belt can be reduced at the edges in the tire width direction A. As a result, the difference in circumferential rigidity of the second belt 5b in the tire width direction A can be reduced, and uneven wear on the tread surface 10a1 of the tire 10 can be suppressed.

By the rubber coated cord 30 being configured to include only one belt cord 31, the width D (see FIGS. 3, 5) of the rubber coated cord 30 in the belt developed view can be easily reduced. The bent portion 41 of the rubber coated cord 30 can therefore easily change in the belt plane direction to be oriented inward in the tire width direction A with a large curvature (small radius of curvature). As a result, an inclination angle θ2 that satisfies the aforementioned relationship (Expression 2) can more easily be achieved.

Furthermore, by the width D (see FIGS. 3, 5) of the rubber coated cord 30 in the belt developed view being set to be equal to or less than the thickness H (see FIG. 5) of the rubber coated cord 30 in the tire radial direction, the bent portion 41 of the rubber coated cord 30 can easily change in the belt plane direction to be oriented inward in the tire width direction A with a large curvature (small radius of curvature). As a result, an inclination angle θ2 that satisfies the aforementioned relationship (Expression 2) can more easily be achieved.

By the bent portion 41 of the rubber coated cord 30 not including a portion extending linearly in the tire circumferential direction C in the belt developed view (see FIGS. 2, 3), the component of the belt cord 31 in the tire circumferential direction C at the bent portion 41 of the rubber coated cord 30 can be reduced. As a result, an inclination angle θ2 that satisfies the aforementioned relationship (Expression 2) can more easily be achieved.

INDUSTRIAL APPLICABILITY

The present invention relates to a pneumatic tire.

REFERENCE SIGNS LIST

| 2 | Bead core |
| 3 | Bead filler |
| 4 | Carcass |
| 4a | Carcass ply |
| 4a1 | Main body |
| 4a2 | Turn-up portion |
| 5 | Belt |
| 5a | First belt |
| 5b | Second belt (example of endless belt) |
| 5b1 | Outer edge of second belt in tire width direction (example of outer edge of endless belt in tire width direction) |

| 5c | Third belt |
| 6 | Cushion rubber |
| 7 | Tread rubber |
| 7a | Center land portion |
| 7a1 | Inner circumferential groove |
| 7b | Intermediate land portion |
| 7b1 | Outer circumferential groove |
| 7c | Shoulder land portion |
| 7c1 | Tread edge |
| 8 | Side rubber |
| 9 | Inner liner |
| 10 | Pneumatic tire |
| 10a | Tread portion |
| 10a1 | Tread surface |
| 10b | Sidewall portion |
| 10c | Bead portion |
| 20a | First belt layer |
| 20b | Second belt layer |
| 20c | Third belt layer |
| 20d | Fourth belt layer |
| 30 | Rubber coated cord of second belt |
| 31 | Belt cord of second belt |
| 32 | Coating rubber of second belt |
| 41 | Bent portion |
| 42 | Inclined extending portion |
| A | Tire width direction |
| B | Tire radial direction |
| B1 | Outward in tire radial direction |
| B2 | Inward in tire radial direction |
| C | Tire circumferential direction |
| L | Length between two intersections adjacent in tire circumferential direction |
| T | Intersection |
| O | Center line of belt cord |
| D | Width of rubber coated cord in developed view of belt |
| W | Width of belt cord in developed view of belt |
| H | Thickness of rubber coated cord in tire radial direction |
| CL | Tire equatorial plane |
| $\theta 1$ | Inclination angle, relative to tire circumferential direction, of inclined extending portion of rubber coated cord in developed view of belt |
| $\theta 2$ | Inclination angle, relative to tire circumferential direction, of belt cord of rubber coated cord in end view of belt |

**Claims**

1. A pneumatic tire (10) comprising a carcass (4) toroidally extending between a pair of bead portions (10c), a belt (5b) disposed on a tire radial outer side of the carcass (4), and a tread rubber (7) disposed on a tire radial outer side of the belt (5b), wherein

   the belt (5b) is an endless belt in which a rubber coated cord (30), formed by coating a belt cord (31) with rubber (32), changes in a belt plane direction to be oriented inward in a tire width direction (A) at both ends in the tire width direction (A) and extends in a zigzag manner in a tire circumferential direction (C),
   the rubber coated cord (30) includes

   bent portions (41) located at both ends of the endless belt in the tire width direction (A), and
   inclined extending portions (42) located towards a center in the tire width direction (A) from the bent portions (41) and extending at an inclination relative to the tire circumferential direction (C),

   an outer edge (5b1) of the endless belt in the tire width direction (A) is configured by a plurality of the bent portions (41) of the rubber coated cord (30) being disposed along the tire circumferential direction (C),

in a developed view of the endless belt, an intersection formed by the belt cord (31) intersecting at two bent portions (41), adjacent in the tire circumferential direction (C), of the rubber coated cord (30) is designated as T, and

in the developed view of the endless belt, a length L in the tire circumferential direction (C) between two intersections T adjacent in the tire circumferential direction (C), a width W of the belt cord (31), and an inclination angle θ1 of the belt cord (31) relative to the tire circumferential direction (C) at the inclined extending portions (42) of the rubber coated cord (30) satisfy relationships

$$5° < θ1 ≤ 10°, \text{ and } L < (3W/\tan(θ1 - 2°)),$$

or

$$10° < θ1 ≤ 45°, \text{ and } L < (3W/\tan(θ1 - 5°)).$$

2. The pneumatic tire (10) according to claim 1, wherein the rubber coated cord (30) includes only one of the belt cord (31).

3. The pneumatic tire (10) according to claim 1 or 2, wherein the rubber coated cord (30) has a width (D), in the developed view of the endless belt, equal to or less than a thickness (H), in a tire radial direction, of the rubber coated cord (30).

4. The pneumatic tire (10) according to any one of claims 1 to 3, wherein

the endless belt is formed by at least two belt layers by the inclined extending portions (42) of the rubber coated cord (30) overlapping in a tire radial direction (B), and
in each belt layer (20b, 20c), two of the inclined extending portions (42) adjacent in the tire circumferential direction (C) within the rubber coated cord (30) do not have an overlapping portion in the tire radial direction (B).

5. The pneumatic tire (10) according to any one of claims 1 to 4, wherein the bent portions (41) of the rubber coated cord (30) do not include a portion extending linearly in the tire circumferential direction (C) in the developed view of the endless belt.

6. The pneumatic tire (10) according to any one of claims 1 to 5, wherein

an inclination angle of the belt cord (31) relative to the tire circumferential direction (C) at the bent portions (41) of the rubber coated cord (30) between the two intersections T adjacent in the tire circumferential direction (C) in an end view of the outer edge of the endless belt viewed from outside in the tire width direction is designated θ2, and
the inclination angle θ1 and the inclination angle θ2 satisfy relationships

$$5° < θ1 ≤ 10°, \text{ and } θ2 > θ1 - 2°,$$

or

$$10° < θ1 ≤ 45°, \text{ and } θ2 > θ1 - 5°.$$

**Patentansprüche**

1. Luftreifen (10), der eine Karkasse (4), die sich torusförmig zwischen einem Paar Wulstabschnitten (10c) erstreckt, einen Gürtel (5b), der auf einer radialen Reifenaußenseite der Karkasse (4) angeordnet ist, und einen Laufflächengummi (7), der auf einer radialen Reifenaußenseite des Gürtels (5b) angeordnet ist, umfasst, wobei

der Gürtel (5b) ein Endlosgürtel ist, bei dem sich ein gummibeschichteter Kord (30), der durch Beschichten eines Gürtelkords (31) mit Gummi (32) gebildet wird, in einer Gürtelebenenrichtung so ändert, dass er an beiden Enden in Reifenbreitenrichtung (A) nach innen in der Reifenbreitenrichtung (A) ausgerichtet ist und sich in einer Zickzackform in einer Reifenumfangsrichtung (C) erstreckt,
der mit Gummi beschichtete Kord (30)

gebogene Abschnitte (41) einschließt, die sich an beiden Enden des Endlosgürtels in der Reifenbreitenrichtung (A) befinden, und
geneigte Verlängerungsabschnitte (42), die von den gebogenen Abschnitten (41) in Richtung einer Mitte in der Reifenbreitenrichtung (A) angeordnet sind und sich unter einer Neigung relativ zu der Reifenumfangsrichtung (C) erstrecken,

eine Außenkante (5b1) des Endlosgürtels in der Reifenbreitenrichtung (A) durch eine Vielzahl der gebogenen Abschnitte (41) des mit Gummi beschichteten Kords (30) konfiguriert ist, die entlang der Reifenumfangsrichtung (C) angeordnet sind,
in einer Abwicklungsdarstellung des Endlosgürtels ein Schnittpunkt, der dadurch gebildet wird, dass der Gürtelkord (31) an zwei gebogenenen Abschnitten (41), die in der Reifenumfangsrichtung (C) benachbart sind, von dem mit Gummi beschichteten Kord (30) gekreuzt wird, mit T bezeichnet ist, und
in der Abwicklungsdarstellung des Endlosgürtels eine Länge L in der Reifenumfangsrichtung (C) zwischen zwei Schnittpunkten T, die in der Reifenumfangsrichtung (C) benachbart sind, eine Breite W des Gürtelkords (31) und ein Neigungswinkel $\theta 1$ des Gürtelkords (31) relativ zu der Reifenumfangsrichtung (C) an den geneigten Verlängerungsabschnitten (42) des mit Gummi beschichteten Kords (30) die folgenden Beziehungen erfüllen

$$5° < \theta 1 \leq 10° \text{ und } L < (3W/\tan(\theta 1 - 2°)),$$

oder

$$10° < \theta 1 \leq 45° \text{ und } L < (3W/\tan(\theta 1 - 5°)).$$

2. Luftreifen (10) nach Anspruch 1, wobei der mit Gummi beschichtete Kord (30) nur einen des Gürtelkords (31) einschließt.

3. Luftreifen (10) nach Anspruch 1 oder 2, wobei der mit Gummi beschichtete Kord (30) in der Abwicklungsdarstellung des Endlosgürtels eine Breite (D) aufweist, die gleich oder kleiner als eine Dicke (H) des mit Gummi beschichteten Kords (30) in einer Reifenradialrichtung ist.

4. Luftreifen (10) nach einem der Ansprüche 1 bis 3, wobei

der Endlosgürtel von mindestens zwei Gürtellagen gebildet wird, wobei sich die geneigten Verlängerungsabschnitte (42) des mit Gummi beschichteten Kords (30) in einer Reifenradialrichtung (B) überlappen, und
in jeder Gürtelschicht (20b, 20c) zwei der geneigten Verlängerungsabschnitte (42), die in der Reifenumfangsrichtung (C) benachbart sind, innerhalb des mit Gummi beschichteten Kords (30) keinen Überlappungsabschnitt in der Reifenradialrichtung (B) aufweisen.

5. Luftreifen (10) nach einem der Ansprüche 1 bis 4, wobei die gebogenen Abschnitte (41) des mit Gummi beschichteten Kords (30) keinen Abschnitt einschließen, der sich in der Abwicklungsdarstellung des Endlosgürtels linear in der Reifenumfangsrichtung (C) erstreckt.

6. Luftreifen (10) nach einem der Ansprüche 1 bis 5, wobei

ein Neigungswinkel des Gürtelkords (31) relativ zu der Reifenumfangsrichtung (C) an den gebogenen Abschnitten (41) des mit Gummi beschichteten Kords (30) zwischen den zwei Schnittpunkten T, die in der Reifenumfangsrichtung (C) benachbart sind, in einer Endansicht der Außenkante des Endlosgürtels von außen in der Reifenbreitenrichtung betrachtet mit $\theta 2$ bezeichnet ist, und
der Neigungswinkel $\theta 1$ und der Neigungswinkel $\theta 2$ folgende Beziehungen erfüllen

$$5° < \theta 1 \leq 10° \text{ und } \theta 2 > \theta 1 - 2°,$$

oder

$$10° < \theta 1 \leq 45° \text{ und } \theta 2 > \theta 1 - 5°.$$

**Revendications**

1. Pneu (10) comprenant une carcasse (4) s'étendant de manière toroïdale entre une paire de parties de talon (10c), une courroie (5b) disposée sur un côté radial extérieur du pneu de la carcasse (4), et un caoutchouc de bande de roulement (7) disposé sur un côté radial extérieur du pneu de la courroie (5b), dans lequel

   la courroie (5b) est une courroie sans fin, dans laquelle un câble recouvert de caoutchouc (30), formé en recouvrant un câble de courroie (31) avec du caoutchouc (32), change dans une direction de plan de courroie pour être orienté vers l'intérieur dans le sens de la largeur du pneu (A) aux deux extrémités dans le sens de la largeur du pneu (A) et s'étend en zigzag dans une direction circonférentielle du pneu (C),
   le câble recouvert de caoutchouc (30) inclut

   des parties courbées (41) situées aux deux extrémités de la courroie sans fin dans le sens de la largeur du pneu (A), et
   des parties s'étendant de manière inclinée (42) situées vers un centre dans le sens de la largeur du pneu (A) à partir des parties courbées (41) et s'étendant selon une inclinaison par rapport à la direction circonférentielle du pneu (C),

   un bord extérieur (5b1) de la courroie sans fin dans le sens de la largeur du pneu (A) est configuré par une pluralité de parties courbées (41) du câble recouvert de caoutchouc (30) disposées le long de la direction circonférentielle du pneu (C),
   dans une vue développée de la courroie sans fin, une intersection formée par le câble de courroie (31) croisant deux parties courbées (41), adjacentes dans la direction circonférentielle du pneu (C), du câble recouvert de caoutchouc (30) est désignée par T, et
   dans la vue développée de la courroie sans fin, une longueur L dans la direction circonférentielle du pneu (C) entre deux intersections T adjacentes dans la direction circonférentielle du pneu (C), une largeur W du câble de courroie (31) et un angle d'inclinaison $\theta1$ du câble de courroie (31) par rapport à la direction circonférentielle du pneu (C) au niveau des parties s'étendant de manière inclinée (42) du câble recouvert de caoutchouc (30) satisfont aux relations

$$5° < \theta1 \leq 10°, \text{ et } L < (3W/\tan(\theta1 - 2°)),$$

   ou

$$10° < \theta1 \leq 45°, \text{ et } L < (3W/\tan(\theta1 - 5°)).$$

2. Pneu (10) selon la revendication 1, dans lequel le câble recouvert de caoutchouc (30) n'inclut qu'un seul câble de courroie (31).

3. Pneu (10) selon la revendication 1 ou 2, dans lequel le câble recouvert de caoutchouc (30) présente une largeur (D), dans la vue développée de la courroie sans fin, égale ou inférieure à une épaisseur (H), dans une direction radiale du pneu, du câble recouvert de caoutchouc (30).

4. Pneu (10) selon l'une quelconque des revendications 1 à 3, dans lequel

   la courroie sans fin est formée d'au moins deux couches de courroie par les parties s'étendant de manière inclinée (42) du câble recouvert de caoutchouc (30) se chevauchant dans une direction radiale du pneu (B), et
   dans chaque couche de courroie (20b, 20c), deux des parties s'étendant de manière inclinée (42) adjacentes dans la direction circonférentielle du pneu (C) à l'intérieur du câble recouvert de caoutchouc (30) sont exemptes de partie chevauchante dans la direction radiale du pneu (B).

5. Pneu (10) selon l'une quelconque des revendications 1 à 4, dans lequel les parties courbées (41) du câble recouvert de caoutchouc (30) n'incluent pas de partie s'étendant linéairement dans la direction circonférentielle du pneu (C) dans la vue développée de la courroie sans fin.

6. Pneu (10) selon l'une quelconque des revendications 1 à 5, dans lequel

un angle d'inclinaison du câble de courroie (31) par rapport à la direction circonférentielle du pneu (C) au niveau des parties courbées (41) du câble recouvert de caoutchouc (30) entre les deux intersections T adjacentes dans la direction circonférentielle du pneu (C) dans une vue d'extrémité du bord extérieur de la courroie sans fin vue de l'extérieur dans le sens de la largeur du pneu est désigné par θ2, et

l'angle d'inclinaison θ1 et l'angle d'inclinaison θ2 satisfont aux relations

$$5° < θ1 ≤ 10° \text{ et } θ2 > θ1 - 2°,$$

ou

$$10° < θ1 ≤ 45° \text{ et } θ2 > θ1 - 5°.$$

# FIG. 1

EP 4 431 310 B1

# FIG. 2

# FIG. 3

# FIG. 4

EP 4 431 310 B1

# FIG. 5

**REFERENCES CITED IN THE DESCRIPTION**

**Patent documents cited in the description**

- JP 2016534928 A
- US 2006000536 A1
- US 2005056359 A1